# FASCICULE DE BREVET EUROPEEN

(11) **EP 3 011 548 B1**
(45) Date de publication et mention de la délivrance du brevet: **29.07.2020**
(21) Numéro de dépôt: 14739868.9
(22) Date de dépôt: 16.06.2014
(51) Int. Cl.: G09B 9/00, F41G 3/26

(54) **PROCÉDÉ DE MISE EN OEUVRE D'UN ESSAI DE SIMULATION D'UNE SITUATION RELLE COMPRENANT UNE GÉNÉRATION DE DIFFÉRENTS CONTEXTES VIRTUELS**
VERFAHREN ZUR DURCHFÜHRUNG EINES TESTS MIT SIMULATION EINER REALEN SITUATION EINSCHLIESSLICH ERZEUGUNG VERSCHIEDENER VIRTUELLER KONTEXTE
METHOD FOR CARRYING OUT A REAL SITUATION SIMULATION TEST INCLUDING GENERATION OF VARIOUS VIRTUAL CONTEXTS

(30) Priorité: 17.06.2013 FR 1301407
(43) Date de publication de la demande: 27.04.2016
(73) Titulaire: Airbus Defence and Space SAS, 31402 Toulouse Cedex 4 (FR)
(72) Inventeur: BIRAN, Hervé, F-78800 Houilles (FR); AUBE, Christophe, BA 133 Nancy (FR); KIMMECHE, Lionel, F-94114 Arcueil (FR)
(74) Mandataire: Cabinet Le Guen Maillet
(86) Numéro de dépôt international: PCT/FR2014/000134
(87) Numéro de publication internationale: WO 2014/202844

(56) Documents cités:
- FR-A1- 2 521 328
- US-A- 3 927 480
- US-A- 4 040 744
- US-A- 4 091 412
- US-A- 4 600 305
- US-A- 5 690 491
- US-A- 5 751 259
- US-A- 6 050 822
- US-A1- 2011 023 132
- Nato Standardization Agency: "STANAG 3797 AO (EDITION 4)", , 29 avril 2009 (2009-04-29), pages 1-50, XP055116495, Extrait de l'Internet: URL:http://airlandintegration.files.wordpr ess.com/2013/04/stanag-3797-ed4-27apr09.pd f [extrait le 2014-05-06] cité dans la demande

## Description

### DOMAINE

Le domaine de l'invention concerne les procédés et systèmes visant à reconstituer un environnement opérationnel d'un champ de bataille.

Plus particulièrement, l'invention concerne un procédé de mise en œ uvre d'un système pour l'entrainement d'un soldat devant fournir des données relatives à une cible à atteindre par un pilote d'un aéronef.

### ETAT DE L'ART

Aujourd'hui, il existe différentes solutions permettant de reconstituer un environnement propre au champ opérationnel de combat pour un soldat chargé de transmettre des informations relatives à une cible à atteindre.

Le soldat a un statut de contrôleur aérien sur le terrain, ce statut est désigné par l'acronyme FAC qui signifie « Forward air controller» dans la terminologie anglo-saxonne (OTAN). Il assiste un ou des aéronef(s) en approche sur un terrain opérationnel dans leur mission pour atteindre une cible sur le champ de bataille.

Généralement, le FAC transmet les coordonnées de la cible à un pilote qui peut par exemple armer son système de tir sur une cible désignée.

Le FAC a différentes missions qui consistent à désigner ou illuminer une cible et éventuellement aider au guidage de l'aéronef ou d'un tir. Il donne également une autorisation de tir depuis le sol.

Actuellement, les qualifications requises pour former un FAC nécessitent une certification OTAN (STANAG 3797) et de nombreux entrainements. En effet, la mission est réalisée dans un environnement critique, nécessite des compétences spécifiques et doit être réalisée dans un temps très court.

Dans ce contexte, il est important de permettre un entrainement des FAC dans un environnement virtuel de sorte à utiliser des scénarii variés (opérations extérieures, présence de civils) et à diminuer les opérations de guidage réel avec la mobilisation d'un aéronef et d'un pilote. Une exigence importante des simulateurs est que le FAC doit pouvoir avoir un visuel à tout instant sur la cible repérée et sur l'aéronef qui peut venir d'une position arrière au FAC. Ainsi, une vision 360° est nécessaire.

Il existe des simulateurs permettant de reconstituer un environnement opérationnel à 360° mais ces derniers sont difficiles à mettre en œuvre car ils sont très complexes et onéreux. Notamment, il existe une solution qui consiste à reconstituer un dôme intégral comprenant la mise en œ uvre d'une structure spatiale importante, une installation de projecteurs vidéo complexes. Les dômes 360°sont très onéreux et nécessitent de nombreuses heures d'installation, de calibration et d'entretien.

On notera le document de brevet US 5,751,259 A, qui décrit un système d'affichage comportant deux afficheurs destinés à être placés respectivement devant les veux d'un utilisateur. Le système d'affichage comporte un détecteur de mouvement des veux de l'utilisateur configuré pour déterminer l'axe de vision de l'utilisateur. Le système est tel que les afficheurs sont mécaniquement déplacés en fonction de l'axe de vision de l'utilisateur de sorte à assurer que le centre de chaque afficheur coïncide toujours avec l'axe de vision de l'utilisateur.

On notera aussi le document de brevet US 6,050,822 A, qui décrit un environnement de simulation en réalité virtuelle dans lequel un tapis d'électroaimants est utilisé pour donner l'impression au fantassin de se déplacer dans un environnement en trois dimensions.

### RESUME DE L'INVENTION

L'invention vise à pallier à ces inconvénients.

Un objet de l'invention concerne un procédé de mise en œuvre d'un essai de simulation d'une situation réelle, comprend :
- une génération d'un premier contexte de simulation comprenant un premier affichage :
   ∘ d'une première portion d'un environnement virtuel défini sur 360° sur un écran semi hémisphérique, ladite portion étant projetée sur un premier angle inférieur à 300° ;
   ∘ d'un avatar représentant un utilisateur en simulation, l'avatar étant généré à une position GPS émulée de l'utilisateur en simulation dans l'environnement virtuel, et l'avatar étant dirigé dans l'environnement virtuel grâce à un dispositif de commande, le premier affichage étant centré sur une direction de la poitrine de l'avatar ;
- une activation d'une génération d'un second contexte de simulation comprenant:
   ∘ une récupération de la position de la tête de l'utilisateur en simulation et de l'orientation de la tête de l'utilisateur en simulation à partir d'un premier dispositif de capture positionné sur un casque porté par l'utilisateur en simulation, le casque avant une position GPS calibrée pour être celle de l'avatar dans l'environnement virtuel,
   ∘ une génération d'une seconde portion rafraichie de l'environnement virtuel calculée en fonction de la position et de l'orientation de la tête de l'utilisateur en simulation,
   ∘ un affichage de ladite seconde portion sur une optique intégrée au casque.

De plus la première et la seconde portion coïncident sur un angle correspondant à celui de la seconde portion pour au moins une position et une orientation prédéfinies de la tête de l'utilisateur en simulation, le premier contexte et le second contexte étant calibrés pour correspondre entre eux lorsque l'orientation de la tête de l'utilisateur en simulation intercepte l'écran semi hémisphérique.

Un avantage du procédé de l'invention est qu'il ne nécessite pas de dôme ou d'écran de très grande taille. L'utilisateur peut bénéficier de différents contextes générés selon les modes d'utilisation correspondant à une visualisation directe de l'écran ou à la visualisation d'une image dans une optique d'un casque. Le mode d'utilisation d'un casque permet à l'utilisateur d'obtenir six degrés de libertés total lui permettant de visualiser une image à 360° dont 3 degrés en translation et 3 degrés en rotation.

Selon un mode de réalisation, le premier angle est sensiblement égal à 180°.

Selon un mode de réalisation, le procédé comprend une activation d'une génération d'un troisième contexte de simulation comprenant:
∘ une récupération de la position de jumelles et de leur orientation à partir d'un second dispositif de capture positionné sur des jumelles maintenue par l' utilisateur en simulation ;
∘ une génération d'une troisième portion rafraichie de l'environnement virtuel calculée en fonction de la position et de l'orientation des jumelles, la troisième portion correspondant à une portion de la seconde portion à laquelle un facteur de grossissement est appliqué,
∘ un affichage de ladite troisième portion sur une optique intégrée aux jumelles,

De plus, le premier contexte et le troisième contexte sont calibrés pour correspondre entre eux lorsque l'orientation de la tête de l'utilisateur en simulation intercepte l'écran semi hémisphérique.

Ce mode permet d'offrir à l'utilisateur un troisième mode lui permettant une visualisation à 360° d'une image grossie.

Selon un mode de réalisation, une administration des première et seconde calibrations est effectuée via un serveur distant.

Selon un mode de réalisation, l'activation de la génération du second contexte de simulation est effectuée au moyen d'une manette.

Selon un mode de réalisation, l'activation de la génération du troisième contexte de simulation est effectuée au moyen d'un calculateur permettant de comparer la proximité des positions des premier et second dispositifs de capture avec un seuil de référence.

Selon un mode de réalisation, l'affichage de l'écran semi hémisphérique est figé sur le premier contexte défini par la dernière position et orientation de l'avatar, sur activation de la génération du second contexte.

Un autre objet de l'invention concerne un système de simulation de mise en œuvre d'un essai de simulation d'une situation réelle comprenant :
- des moyens pour générer un premier contexte de simulation comprenant des moyens pour afficher :
   ∘ une première portion d'un environnement virtuel défini sur 360° sur un écran semi hémisphérique, ladite portion étant projetée sur un premier angle inférieur à 300° ;
   ∘ un avatar représentant un utilisateur en simulation, l'avatar étant généré à une position GPS émulée de l'utilisateur en simulation dans l'environnement virtuel, et l'avatar étant dirigé dans l'environnement virtuel grâce à un dispositif de commande, le premier affichage étant centré sur une direction de la poitrine de l'avatar ;
- des moyens pour activer une génération d'un second contexte de simulation comprenant:
   ∘ des moyens de récupérer la position de la tête de l'utilisateur en simulation et de l'orientation de la tête de l'utilisateur en simulation à partir d'un premier dispositif de capture positionné sur un casque porté par l'utilisateur en simulation, le casque ayant une position GPS calibrée pour être celle de l'avatar dans l'environnement virtuel,
   ∘ des moyens pour générer une seconde portion rafraichie de l'environnement virtuel calculée en fonction de la position et de l'orientation de la tête de l'utilisateur en simulation,
   ∘ des moyens pour afficher ladite seconde portion sur une optique intégrée au casque.
De plus, la première et la seconde portion coïncidant sur un angle correspondant à celui de la seconde portion pour au moins une position et une orientation prédéfinies de la tête de l'utilisateur en simulation, le premier contexte et le second contexte étant calibrés pour correspondre entre eux lorsque l'orientation de la tête de l'utilisateur en simulation intercepte l'écran semi hémisphérique.

Selon un mode de réalisation, ledit système de simulation comprend :
- l'écran semi-hémisphérique ;
- deux projecteurs croisés permettant chacun l'affichage d'une demi-portion de l'image sur chacun des côtés de l'écran semi hémisphérique ;
- un premier générateur d'images et un second générateur d'images, les images étant générées à partir de ladite position GPS émulée dans l'environnement virtuel et d'une librairie d'images stockées dans une mémoire ;
- le casque ;
- des jumelles comportant une seconde optique destinée à afficher un troisième contexte rafraichi en fonction de la position et de l'orientation des jumelles obtenues grâce à un second dispositif de capture ;
- le premier dispositif de capture et le second dispositif de capture, les positions et orientations du casque et des jumelles étant régulièrement transmises au premier générateur d'images ;
- le second dispositif générateur d'images, configuré pour calculer le premier contexte en fonction de ladite position GPS émulée dans l'environnement virtuel provenant du premier générateur d'images, le premier contexte ainsi calculé étant traité pour être séparé en deux demi-portions d'image transmises chacune à un projecteur respectif parmi lesdits projecteurs ; et
- un dispositif d'administration comprenant un serveur permettant de collecter des données transmises par le premier générateur d'images, les données transmises comprenant au moins ladite position GPS émulée dans l'environnement virtuel.

Selon un mode de réalisation, le système de simulation comprend un premier afficheur configuré pour afficher un contexte parmi les premier, second et troisième contextes.

Selon un mode de réalisation, le dispositif d'administration comporte un second afficheur configuré pour cloner l'image affichée par le premier afficheur.

Selon un mode de réalisation les premier et second dispositifs de capture comprennent des capteurs électromagnétiques.

Selon un mode de réalisation les premier et second dispositifs de capture comprennent des capteurs inertiels et des capteurs à ultrasons.

Selon un mode de réalisation les premier et second dispositifs de capture comprennent des capteurs vidéo.

### BREVE DESCRIPTION DES FIGURES

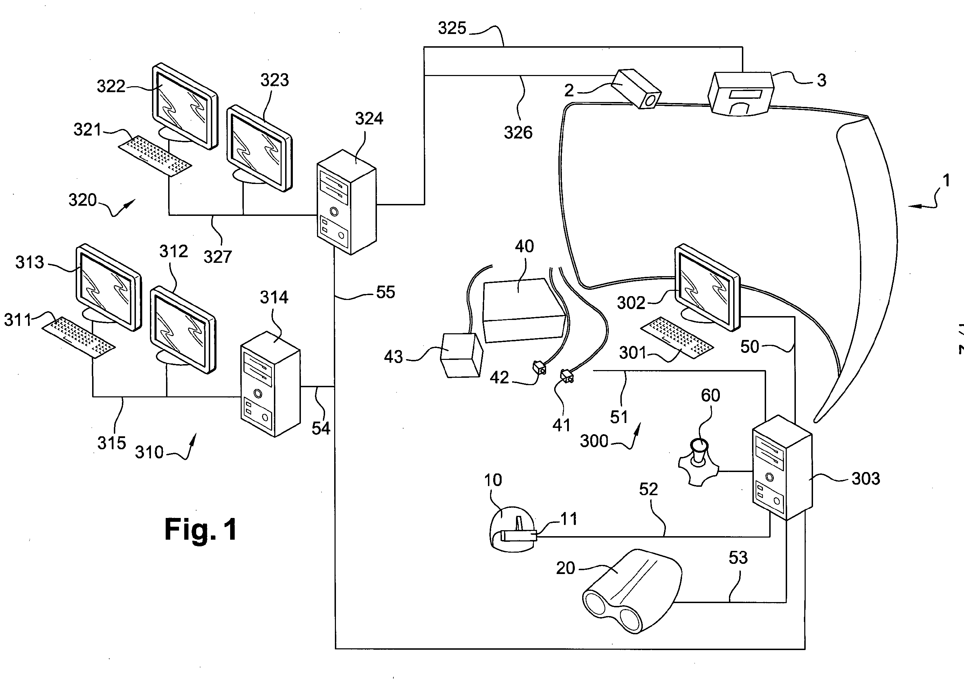

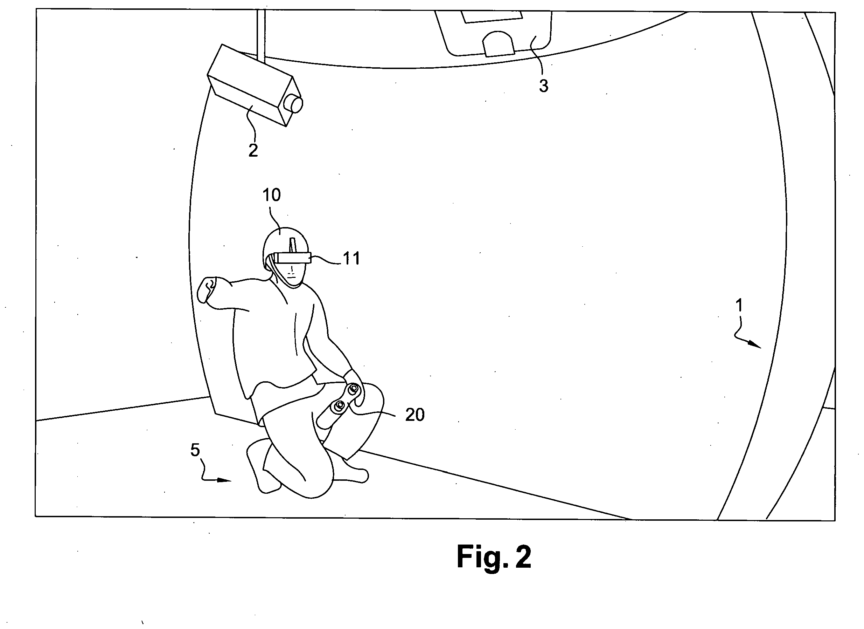

D'autres caractéristiques et avantages de l'invention ressortiront à la lecture de la description détaillée qui suit, en référence aux figures annexées, qui illustrent :
▪ figure 1 : un schéma du système permettant la mise en œuvre du procédé de l'invention ;
▪ figure 2 : un schéma du système dans lequel un utilisateur est en position de dérouler sa mission de simulation, selon le procédé de l'invention.

### DESCRIPTION

La figure 1 représente un système de simulation de l'invention comprenant un premier dispositif de commande 300, un second dispositif de commande 310, et un troisième dispositif de commande 320.

Chacun des dispositifs de commande comprend un calculateur permettant de générer un premier environnement virtuel 360° tel qu'un programme permettant la génération d'un jeu vidéo 3D.

On appelle dans la suite de la description indifféremment un PC, un calculateur ou un générateur d'images en ce qui concerne les équipements 324, 314 et 303 qui sont susceptibles d'être l'un de ces équipements ou les trois à la fois.

### PROJECTEURS

Le système de simulation de l'invention comprend un écran 1 formant une bande latérale semi-hémisphérique, au moins deux projecteurs 2, 3 permettant de projeter chacun une image sur une partie de l'écran 1. La forme d'affichage peut être configurée pour être de type WUXGA, dont l'acronyme désigne dans la terminologie anglo-saxonne : « Wide Ultra Extended Graphics Array ». Il s'agit d'une norme d'affichage correspondant à un UXGA large dont la définition est de 1920×1200 pixels. Avec une telle configuration, une résolution angulaire du pixel de 5 minutes d'angle par pixel peut être assurée en moyenne sur tout l'écran 1. Au centre de l'écran 1, une résolution peut être obtenue inférieure à 3 minutes d'angle par pixel.

Le visuel sur l'écran 1 obtenu par projection est optimisé pour un point de vue situé au centre de la sphère qui est confondue avec la bande latérale semi-hémisphérique sur ladite portion d'écran 1.

Les projecteurs comportent chacun une optique ayant une lentille de grand angle de l'ordre de 0,67 :1, de sorte à éviter la génération d'une ombre d'un utilisateur 5 sur l'écran.

L'invention permet de disposer que de deux projecteurs sensiblement en face de l'écran et légèrement orientés pour afficher dans la diagonale opposée des images sur l'écran 1. Le choix et la configuration des projecteurs permettent de conserver une bonne résolution à l'affichage.

L'affichage de chaque projecteur recouvre la hauteur de l'écran 1 et s'étend sensiblement sur une demi-longueur. Les deux affichages respectifs des images projetées de chacun des deux projecteurs sont agencés sensiblement sur une demi-longueur de l'écran 1 et forment une unique image construite sur toute la longueur de l'écran 1.

Un dispositif électronique de compensation peut être utilisé pour déformer les images projetées pour qu'elles soient affichées correctement sur l'écran 1 semi-hémisphérique. Le dispositif électronique de compensation permet de traiter l'image générée en sortie des projecteurs pour adapter les corrections optiques nécessaires. Il sont alors disposés en coupure sur les liens respectifs 325 et 326 reliant chacun des projecteurs 2, 3 au générateur d'images 324.

Le dispositif électronique de compensation peut comporter deux boitiers indépendants situés en amont du projecteur pour lui délivrer les images adéquates à projeter.

Une calibration de l'affichage de l'écran 1 peut être effectuée avant le lancement de la simulation de sorte à régler l'agencement des projecteurs et les angles de projection, les bordures d'affichages sur l'écran 1, les réglages de recouvrement dans la bande verticale centrale, les correctifs à appliquer à la déformation de l'image.

Une zone de recouvrement des deux images est admise selon une bande verticale sensiblement située au centre de l'écran 1. La zone de recouvrement peut correspondre à une bande verticale formant sensiblement un angle de 10° au centre de l'écran 1. Un procédé de correction permettant de corriger les effets de bords de l'image affichée au centre peut être mis en place selon le procédé de l'invention. L'image affichée qui résulte de la superposition de deux images projetées se recouvrant peut être rendue nette et précise en assurant une continuité avec les deux images projetées de chaque coté de l'écran 1 par chacun des projecteurs.

Selon un mode de réalisation de l'invention, le troisième dispositif de commande 320 comporte un calculateur 324 tel qu'un PC, un clavier 321 et éventuellement deux afficheurs 322 et 323. Le Poste de commande 320 comprend un dispositif de génération d'images 324 permettant la génération d'un premier contexte à partir de coordonnées récupérées de l'avatar en position et en orientation. Les deux afficheurs 322 et 323 sont éventuellement reliés au même générateur d'images 324 par un lien 327.

Les deux projecteurs sont reliés au dispositif de génération d'images 324 par des liens 325, 326. Le dispositif de génération d'images 324 permet une génération d'un premier contexte de simulation comprenant un premier affichage.

Le PC 324 comprend une même version du générateur du premier environnement virtuel. Les dispositifs de génération d'images 303, 314, 324 comportent les mêmes bases de données cartographiques permettant d'émuler des contextes issus du même premier environnement virtuel.

Le premier contexte correspond à une portion du premier environnement virtuel généré à partir d'une base cartographique et de coordonnées de localisation et de coordonnées d'orientation. Les coordonnées de position et d'orientation de l'avatar 1 sont diffusées depuis le PC 303 au PC 324 et 314, le premier contexte peut être reconstitué à l'identique par chacun des dispositifs de génération d'images.

En conséquence, le PC 324 est capable de générer le premier contexte à partir de l'acquisition des coordonnées de position et d'orientation de l'avatar, par exemple au moyen de la liaison 55.

Les afficheurs 322 et 323 affichent respectivement chacun une partie de l'affichage du premier contexte représenté sur l'écran 1.

Le premier contexte de simulation correspond à une représentation d'une partie du premier environnement virtuel. Le premier affichage comprend la représentation du premier contexte. Le premier environnement virtuel est généré à partir d'un programme, également appelé logiciel ou jeu, permettant la génération d'un environnement virtuel 3D défini sur 360°.

### UTILISATEUR 1 - FAC

Le premier Poste de commande 300 permet à un utilisateur 5 d'afficher sur un afficheur 302 un premier contexte. L'image projetée sur l'écran 1 correspond à ce même premier contexte.

L'afficheur 302 permet l'affichage de différents contextes et assure l'affichage du contexte rendu actif par l'utilisateur 5. L'afficheur 302 est relié au PC 303 par l'intermédiaire d'un lien vidéo 50. Néanmoins, lorsque le premier contexte n'est plus rendu actif du point de vue de l'utilisateur 5, l'affichage du premier contexte est toutefois maintenu sur l'écran 1. L'écran 1 permet d'offrir une représentation du premier contexte choisi à différents utilisateurs lors de la simulation de sorte à offrir une vue constante servant de repère visuel lors de l'exécution de la mission. Quel que soit le mode engagé par l'utilisateur, l'écran 1 affiche toujours le premier contexte.

Lorsque le premier mode est actif, l'afficheur 302 et l'écran 1 représente la même image du premier contexte. Lorsque l'utilisateur 5 bascule de mode, l'affichage de l'écran 1 est figé sur le premier contexte défini par la dernière position et orientation de l'avatar choisi par l'utilisateur 5.

Le PC 303 permet la gestion de l'émulation des coordonnées de géolocalisation et le positionnement de l'avatar selon une orientation ajustée au moyen de la manette 60 par exemple.

Le calculateur du PC 303 est capable de prendre en compte la position de géolocalisation de l'avatar 1 et de générer le premier contexte correspondant à une représentation d'une portion du premier environnement virtuel associé à cette position avec la prise en compte d'une donnée d'orientation désignant une direction. Le premier contexte affiché sur l'afficheur 302 est donc dépendante de l'orientation de l'avatar. La donnée d'orientation peut correspondre à une information de lacet propre à une direction de l'orientation de l'avatar, notamment de sa poitrine. Cette information peut être transmise et prise en compte dans l'affichage de l'image sur l'afficheur 302. Cette donnée permet d'effectuer une rotation de l'avatar sur la ligne d'horizon de sorte à se positionner face à une cible par exemple. La direction de la poitrine permet des libres mouvements de la position de la tête de l'avatar 1. Cette solution permet d'obtenir une image fixe et stable lorsque le premier contexte est affiché sur l'écran 1.

Un lien 55 permet de synchroniser certaines données calculées par le PC 303 avec le PC 324. Parmi ces données, la position et l'orientation de l'avatar dans le premier environnement virtuel permettent de générer un affichage 180° sur les 360° selon un angle de vue centré sur l'avatar. Ces informations de position et d'orientation acquises par le PC 303 peuvent être transmises au PC 324 afin que l'affichage de l'écran 1 corresponde à l'affichage de l'afficheur 302 lorsque cet afficheur affiche le premier contexte.

L'afficheur 302 permet d'afficher le premier contexte ainsi que des informations pratiques telles que la position de l'avatar et une orientation, éventuellement l'heure et d'autres informations pouvant se superposées à l'image. En outre, l'afficheur 302 permet d'afficher en premier plan l'avatar de l'utilisateur 5 et de customiser l'affichage de l'avatar 1 par exemple en ajoutant ou retirant des accessoires.

Selon un mode de réalisation de l'invention, l'avatar 1 de l'utilisateur 5 peut être projeté également sur l'écran 1 au premier plan du premier contexte affiché. L'avatar est généré à une position GPS récupérée du PC 303 et émulée dans le premier environnement virtuel.

La figure 1 représente également tous les éléments du système permettant de mettre en œuvre le procédé de l'invention. Le premier dispositif de commande 300 permet de piloter l'avatar et la vue du premier contexte généré sur l'afficheur 302.

Dans ce premier mode correspondant à l'affichage du premier contexte sur l'afficheur 302, un utilisateur 5 peut choisir un avatar qui évolue dans ledit premier environnement. Notamment, un actionneur telle qu'une manette 60 permet différentes actions permettant de faire évoluer l'avatar de l'utilisateur 5 dans l'environnement virtuel à partir du calculateur du PC 303, telles que :
- avancer et reculer ;
- emprunter des véhicules,
- se retourner et/ou changer l'orientation ;
- se baisser, sauter ;
- ajuster la direction de regard vers le haut, vers le bas.
- figer une position de l'avatar et une orientation du buste lorsque le casque est porté ou qu'une action spécifique est activée.
- utiliser des équipements virtuels comme des armes, des fumigènes etc.

Les coordonnées de position ou les coordonnées d'orientation peuvent être également définies au moyen d'une commande numérique, typiquement au départ d'une mission l'avatar est généré à une position définie et est orienté selon une direction par défaut.

En outre, l'avatar peut se déplacer au moyen d'un véhicule dans le premier environnement virtuel par voie de terre ou dans les airs. L'afficheur 302 permet également d'afficher des cartes du premier environnement virtuel sous différentes vues. L'utilisation des cartes permet d'obtenir une vue plus générale de l'environnement et de basculer d'une vue à une autre.

En outre, le PC 303 comprend une fonction de désignation d'une cible. Cette désignation peut être effectuée par la souris directement sur l'afficheur 302 au moyen de la récupération d'une position de pointeur et d'une direction. Dans ce mode de réalisation, la désignation peut être également effectuée à partir d'une manette 60.

Le PC 303 comprend également une horloge.

L'écran d'affichage 1 permet d'afficher une portion de l'environnement 3D. Pour cela une récupération de la position, telle qu'une position GPS dans le premier environnement virtuel de l'avatar ainsi qu'une orientation, permettent de générer l'affichage d'un premier contexte.

La première portion du premier environnement virtuel défini sur 360° est projetée en partie sur un angle de 180° dur l'écran semi-hémisphérique 1 selon une direction prédéfinie par l'utilisateur 5.

L'afficheur 302 permet de garder constamment la vue qui est reproduite sur l'écran 1 lorsqu'un mode de simulation actif correspond à la génération du premier contexte sur l'afficheur 302. L'afficheur 302 est relié au calculateur 303 qui ce dernier comporte différentes interfaces de sorties.

Parmi les interfaces de sortie ou d'entrées, une liaison 54 permet les échanges d'images pour cloner l'affichage de l'afficheur 302 dans l'afficheur 312. Une liaison 55 permet le transfert des données de positions et d'orientation au générateur d'images 320 pour la projection sur l'écran 1.

En outre, le PC 303 comporte des entrées/sorties 51, 52, 53 permettant :
- d'acquérir les données d'orientation provenant des dispositifs de capture de mouvements et de position 41 et 42 respectivement positionnés sur le casque 10 et sur les jumelles 20 ;
- transmettre les images issues des contextes du premier environnement virtuel d'une part à l'optique 11 du casque 10 via le lien 52 et d'autre part à l'optique des jumelles 20 via le lien 53.

Dans le premier mode, l'utilisateur est libre d'activer son avatar dans le premier environnement virtuel, l'affichage est centré sur une direction de la poitrine de l'avatar et indépendant des mouvements de tête de l'avatar. Un clavier 301 permet d'activer certaines commandes de déplacements de l'avatar dans le premier contexte ou valider des entrées telles que la définition d'une position ou d'un cap ou encore ou de désigner une cible par exemple avec une souris. Ces dernières fonctions peuvent être assurées par une manette 60.

Le PC 303 comprend un calculateur ainsi qu'une carte graphique suffisamment puissants pour générer le premier contexte ainsi que les mouvements 3D de l'avatar évoluant dans le premier contexte. Ce dernier peut être, comme énoncé précédemment, issu d'un jeu vidéo avec des cartographies provenant de prises de vues d'un environnement réel. Les coordonnées émulées de l'avatar peuvent être définies par des coordonnées GPS par exemple mais également par des coordonnées MGRS qui est le système de coordonnées géographiques standard de l'OTAN, dont l'acronyme désigne « Military Grid Reference System » dans la terminologie anglo-saxonne.

### INSTRUCTEUR

Selon un mode de réalisation de l'invention, un second dispositif de commande 310 comporte un calculateur 314 tel qu'un PC, un clavier 311 et éventuellement une souris et deux afficheurs 312 et 313 relié au calculateur 314 aux moyens de lien 315 permettant une interface vidéo.

Le PC 314 comprend une même version du générateur du premier environnement virtuel ainsi que les mêmes bases de données cartographiques permettant d'émuler le premier environnement virtuel que le PC 303 installé à proximité de l'utilisateur 5.

Le dispositif de commande 310 permet à un second utilisateur, tel qu'un instructeur ou un pilote, de suivre la situation de l'avatar dans le premier contexte affiché sur l'afficheur 302.

Le dispositif de commande 310 comprend différents afficheurs tels que ceux représentés sur la figure 1 : les afficheurs 313 et 312.

Selon un mode de réalisation de l'invention, un premier afficheur 312 permet d'afficher le premier contexte affiché généré par le PC 303, l'image est clonée. Le premier afficheur 312 permet de basculer l'affichage du premier contexte vers un second contexte tel que celui généré dans une optique du casque 11 détaillée ci-après lorsque l'utilisateur porte le casque et active l'affichage de sa visière intégrée au casque.

Enfin, ce premier afficheur 312 permet également la bascule vers un troisième contexte, tel que celui généré dans l'optique des jumelles 20 détaillée ci-après, lorsque l'utilisateur active la vision de ses jumelles.

Un second afficheur 312 permet de générer une vision d'un aéronef arrivant à proximité d'une cible pointée par l'utilisateur 5. Ainsi l'instructeur, mais également le pilote en simulation peut conserver une vision de l'aéronef et celle de l'utilisateur 5 pour le guider dans sa mission.

L'instructeur peut donc suivre le premier contexte dans l'afficheur 302 tel que l'utilisateur 5 peut voir dans l'afficheur 302.

Un troisième afficheur, non représenté sur la figure 1, permet à l'instructeur d'afficher un outil d'administration de la mission. L'outil d'administration permet de débuter la mission et de la terminer par exemple. Cet outil d'administration permet également de lancer les projecteurs 2 et 3.

### CASQUE

Lorsque l'utilisateur 5 porte le casque 10 et active la vision intégrée 11, un second contexte du premier environnement virtuel est généré dans l'optique du casque 10, l'utilisateur 5 rentre dans un second mode. Lorsque le second mode est actif, l'affichage du second contexte est affiché également sur l'afficheur 302. Ce qui permet une cohérence de vues localement entre ce qui est affiché dans l'optique 11 du casque 10et dans l'afficheur 302.

L'instructeur au poste de commandes 310 peut contrôler ce que voit l'utilisateur 5, et au besoin il peut l'assister, via l'afficheur 312 qui représente une image clonée de l'image affichée dans l'afficheur 302.

En revanche, lorsque la bascule du premier mode au second mode est effectuée, l'affichage de contexte sur l'écran 1 correspondant au premier contexte est maintenu.

Le second contexte permet de réduire le champ de vision du premier environnement virtuel à un champ compris entre 70° et 90° correspondant à un champ de vision humain.

L'utilisation du casque 10 et la génération du second contexte permet d'éviter la mise en œuvre d'un écran de type dôme formant un igloo ou une bulle sur 360° comportant un grand nombre de projecteurs.

La vision intégrée devient active lorsque l'utilisateur 5 active un actionneur par exemple à l'aide de la manette 60 ou bien à l'aide d'une commande clavier 301. Selon un autre mode de réalisation, l'activation du second mode peut être effectuée automatiquement lorsque l'utilisateur 5 active l'optique par exemple en abaissant la visière de son casque 10.

Le port du casque permet à l'utilisateur 5 d'obtenir un second contexte correspondant à une portion restreinte de l'environnement virtuel défini à 360°, ladite portion étant centrée sur un axe défini par rapport au casque, tel que celui par exemple de la direction de la visière. Ainsi, l'utilisateur 5 peut se retourner dos à l'écran 1 par exemple et voir une portion de l'environnement virtuel non affiché sur ce dernier écran 1.

Le casque 10 est muni d'un premier dispositif de capture de mouvement 41 qui permet de connaitre la position et les données d'orientation de la tête selon les informations de roulis, tangage et lacet. Les coordonnées de position et des données d'orientation de la tête sont transmises au calculateur du PC 303 afin de générer un second contexte rafraichi dans l'optique 11 du casque 10.

La position du casque, et donc de la tête, récupérée par le PC303 peut être couplée à une position de l'avatar de sorte à prendre en considération les mouvements de l'utilisateur 5 dans l'espace. Lorsque la position du casque est repérée par rapport à une position de référence, par exemple celle de l'avatar, le calculateur du PC303 ne traite que des décalages de positions vis-à-vis de la position d'une position de référence.

Avantageusement, le dispositif de capture de mouvement 41 peut être agencé sur le dessus du casque et relié au PC 303.

Le premier dispositif de capture de mouvement 41 permet de capturer les données d'orientation de la tête en temps réel et les transmet régulièrement au calculateur du PC 303 via un lien 51. Le lien 51 peut être filaire ou sans fil.

L'image affichée dans l'optique du casque est générée à partir d'un seul canal obtenu au moyen du calculateur du PC 303 et de la bibliothèque d'images correspondantes à l'environnement virtuel chargé.

La résolution de l'image générée dans l'optique 11 du casque 10 peut être d'une résolution suffisante pour permettre à l'utilisateur 5 de visualiser un aéronef s'approchant et arrivant dans son dos. L'utilisateur 5 doit pouvoir se retourner et appréciée une situation nette rapidement. Une résolution peut être par exemple une résolution de 1280x720.

L'utilisateur 5 peut alors reconnaitre un aéronef arrivant d'une position lointaine.

Le casque 10 est avantageusement utilisé lorsque l'aéronef est en approche et que le guidage de l'aéronef impose à l'utilisateur 5 de le garder à vue pendant un court laps de temps.

Une première calibration permet de coordonner la position GPS du casque avec celle de l'avatar. La calibration peut être automatiquement effectuée par le calculateur du PC 303 qui peut utiliser les mêmes données de positionnement dans le premier et le second contexte. Les coordonnées GPS sont les coordonnées de l'avatar dans le premier environnement virtuel.

Une seconde calibration de la vision de l'image générée dans l'optique 11 du casque 10 et celle de l'écran 1 peut être opérée au début de la mission de simulation. La calibration est alors effectuée pour une direction donnée du premier contexte du premier environnement virtuel. L'image projetée sur l'écran 1 et l'image générée dans l'optique 11 du casque 10 se superposent. Lorsque l'utilisateur 5 porte le casque, cette calibration permet d'assurer une cohérence des images entre celles affichées dans l'optique 11 du casque 10 et celle projetée sur l'écran 1, notamment par :
- une superposition des images lorsque la direction du regard de l'utilisateur 5 intercepte l'écran 1 ;
- une continuité des images lors du passage d'une direction du regard interceptant l'écran 1 à une direction hors de l'écran 1.

### JUMELLES

Le système de l'invention comprend des jumelles 20 comprenant une optique intégrée capable d'afficher une image générée par le calculateur du PC 303. L'image générée est également issue du premier environnement virtuel et correspond à un troisième contexte.

Lorsque l'utilisateur 5 porte les jumelles 20 et active la vision intégrée des jumelles, un troisième contexte du premier environnement virtuel est généré dans l'optique des jumelles 20, l'utilisateur 5 rentre dans un troisième mode. Lorsque le troisième mode est actif, l'affichage du troisième contexte est affiché également sur l'afficheur 302. Ce qui permet une cohérence de vues localement entre ce qui est affiché dans l'optique des jumelles 20 et dans l'afficheur 302.

L'instructeur au poste de commandes 310 peut contrôler ce que voit l'utilisateur 5, et au besoin il peut l'assister, via l'afficheur 312 qui représente une image clonée de l'image affichée dans l'afficheur 302 donc de celles des jumelles 20 dans ce troisième mode.

En revanche, lorsque la bascule du premier mode au troisième mode est effectuée, l'affichage de contexte sur l'écran 1 correspondant au premier contexte est maintenu. Ceci reste vrai lorsque le passage du second mode au troisième mode est effectué.

Les jumelles 20 sont munies d'un second dispositif de capture de mouvement 42 qui permet de connaitre la position et les données d'orientation des jumelles selon les informations de roulis, tangage et lacet. Les coordonnées de position et des données d'orientation des jumelles sont transmises au calculateur du PC 303. Les données d'orientation des jumelles et sa position dans l'espace sont transmises à des instants réguliers au calculateur du PC 303 de sorte à produire un troisième contexte asservi sur l'orientation des jumelles. Ceci permet d'afficher une image définie autour d'une direction du regard dans l'environnement virtuel à 360°.

Le troisième contexte correspond à une portion du premier environnement virtuel défini sur un champ de vision restreint et grossi selon un facteur de grossissement des jumelles 20. Par exemple, un facteur de grossissement peut être x10. Le grossissement selon les modes de réalisation peut être variable ou ajustable sur les jumelles.

Le troisième contexte est généré dans l'optique des jumelles 20 par exemple au moyen d'une connectique HDMI qui peut être représentée par le lien 53.

Les jumelles 20 sont reliées au calculateur du PC 303 via un lien pour le transfert de la position et des données d'orientation du dispositif de capture de mouvement des jumelles 20. Il peut s'agir d'un lien filaire type celui représenté 53 ou une liaison sans fil.

Selon un mode de l'invention, les positions du premier dispositif de capture de mouvement 41 et du second dispositif de capture de mouvement 42 peuvent être comparées. Lorsque les deux positions GPS des deux dispositifs de capture 41 et 42 sont dans une zone correspondante à un seuil de distance minimal entre les deux dispositifs, le troisième mode peut être activé automatiquement et donc le troisième contexte peut être généré dans l'optique des jumelles 20. La désactivation du troisième mode peut s'opérer de la même manière lorsque la distance entre les deux dispositifs de capture dépasse un seuil de distance.

Lorsque l'utilisateur 5 porte le casque 10, il peut à tout moment utiliser les jumelles 20 pour obtenir une vue plus adaptée à une situation de reconnaissance lointaine, par exemple pour identifier une cible sur l'écran 1 ou un aéronef arrivant au loin en dehors de la zone de l'écran 1.

De manière concrète, lorsque les jumelles 20 rentrent dans une zone proche du casque 10, l'activation du troisième mode ne nécessite plus d'action spécifique manuelle de l'utilisateur 5.

Ainsi dans un laps de temps très court, l'utilisateur 5 doit pouvoir passer d'une vision « casque » affichant un second contexte à une vision « jumelles » affichant un troisième contexte en minimisant le nombre d'actions à engager. Le procédé de l'invention permet de rendre ce basculement de contexte indépendant d'une action manuelle à réaliser par l'utilisateur 5 par exemple au moyen d'un actionneur. En effet, le système de l'invention permet d'assurer un couplage des deux positions provenant d'une part du casque 10 et d'autre part des jumelles 20. Ce couplage permet d'activer automatiquement le passage du second contexte au troisième contexte et réciproquement.

Une première calibration permet de superposer l'affichage des jumelles au grossissement près avec l'affichage de l'écran 1 de sorte à assurer une continuité du champ de vision lorsque l'utilisateur 5 tourne la tête en dehors de l'écran 1 avec la vision des jumelles active. Cette calibration permet à l'utilisateur 5 de se positionner face à une cible et de la zoomer dans la même direction en activant la vision des jumelles. Le troisième contexte généré dans les jumelles correspond donc à l'image zoomée dans la même direction de l'écran 1 de contexte.

Les données d'orientation peuvent être exprimées en décalage par rapport à une orientation de référence calibrée vis-à-vis d'une direction définie du premier contexte affiché sur l'écran 1.

La jumelle 20 correspondent à des jumelles de télémétrie. Un bouton sur la surface supérieure des jumelles 20 permet d'afficher l'azimut. Un deuxième bouton permet d'afficher la distance du point visé. L'appui sur les deux boutons en même temps permet d'afficher la position GPS ou MGRS du point visé.

Ainsi la calibration du casque et des jumelles peuvent permettre de définir une référence spatiale de sorte à assurer une continuité des second et troisième contextes avec le premier contexte du premier environnement virtuel généré par les dispositifs de génération d'images du PC 324 avec le PC 303.

L'outil d'administration du PC 314 permet d'activer les calibrations des références spatiales, notamment il s'agit d'une synchronisation d'images. Ainsi, l'instructeur permet d'engager la calibration des différents contextes.

Les PC 324, 314 et 303 peuvent être configurés selon une architecture client/serveur. Le PC 314 peut être choisi comme serveur pour permettre une administration des deux autres PC.

### DISPOSITIFS DE CAPTURE DE MOUVEMENT

Selon un mode de réalisation de l'invention, les dispositifs de capture de mouvements 41 et 42 peuvent être des capteurs électromagnétiques. Dans ce mode de réalisation, ils comportent des récepteurs 41 et 42 qui se positionnent dans un champ magnétique généré par un émetteur 43. Les positions et les données d'orientation sont ensuite transmises à un boitier 40 puis transmises au PC 303.

Les opérations de comparaisons de positions des deux dispositifs de capture 41, 42 en vue d'activer le troisième mode automatiquement, peuvent être effectuées soit par le boitier 40 soit par le calculateur du PC 303.

D'autres dispositifs de capture de mouvements peuvent être utilisés tels que des capteurs inertiels ou les caméras vidéo. Typiquement, des capteurs inertiels en combinaison avec des capteurs à ultrasons peuvent être utilisés. Les capteurs inertiels permettent une bonne estimation de l'orientation et les capteurs à ultrasons permettent d'obtenir une bonne estimation de la position. Les caméras vidéo permettent de capturer la position d'un marqueur (généralement des boules blanches) situé dans leur champs de vues (pour une bonne précision plusieurs caméra sont nécessaires. De ce fait, le couplage d'un système comprenant les trois types de capteurs peut constituer une alternative aux dispositifs de capture de mouvements 41, 42 électromagnétiques.

La figure 2 représente un utilisateur 5 en simulation devant un écran 1. L'utilisateur 5 porte un casque 10 et une optique 11, la direction de son regard est légèrement orientée de sorte à regarder derrière lui. Il tient des jumelles 20 prêtes à l'emploi.

## Revendications

1. Procédé de mise en œuvre d'un essai de simulation d'une situation réelle comprenant :
• une génération d'un premier contexte de simulation comprenant un premier affichage :
o d'une première portion d'un environnement virtuel défini sur 360° sur un écran semi hémisphérique (1), ladite portion étant projetée sur un premier angle inférieur à 300° ;
o d'un avatar représentant un utilisateur (5) en simulation, l'avatar étant généré à une position GPS émulée de l'utilisateur (5) en simulation dans l'environnement virtuel, et l'avatar étant dirigé dans l'environnement virtuel grâce à un dispositif de commande (300), le premier affichage étant centré sur une direction de la poitrine de l'avatar ;
• une activation d'une génération d'un second contexte de simulation comprenant:
∘ une récupération de la position de la tête de l'utilisateur (5) en simulation et de l'orientation de la tête de l'utilisateur (5) en simulation à partir d'un premier dispositif de capture positionné sur un casque porté par l'utilisateur (5) en simulation, le casque ayant une position GPS calibrée pour être celle de l'avatar dans l'environnement virtuel,
∘ une génération d'une seconde portion rafraichie de l'environnement virtuel calculée en fonction de la position et de l'orientation de la tête de l'utilisateur (5) en simulation,
∘ un affichage de ladite seconde portion sur une optique intégrée au casque,
• une activation d'une génération d'un troisième contexte de simulation comprenant:
∘ une récupération de la position de jumelles et de leur orientation à partir d'un second dispositif de capture positionné sur des jumelles maintenues par l'utilisateur (5) en simulation ;
∘ une génération d'une troisième portion rafraichie de l'environnement virtuel calculée en fonction de la position et de l'orientation des jumelles, la troisième portion correspondant à une portion de la seconde portion à laquelle un facteur de grossissement est appliqué,
∘ un affichage de ladite troisième portion sur une optique intégrée aux jumelles,
la première et la seconde portion coïncidant sur un angle correspondant à celui de la seconde portion pour au moins une position et une orientation prédéfinies de la tête de l'utilisateur (5) en simulation, le premier contexte et le second contexte étant calibrés pour correspondre entre eux lorsque l'orientation de la tête de l'utilisateur (5) en simulation intercepte l'écran semi hémisphérique (1), le premier contexte et le troisième contexte étant calibrés pour correspondre entre eux lorsque l'orientation de la tête de l'utilisateur (5) en simulation intercepte l'écran semi hémisphérique (1),
et l'activation de la génération du troisième contexte de simulation est effectuée au moyen d'un calculateur (PC 303) comparant la proximité des positions du premier dispositif de capture (41) et du second dispositifs de capture (42) avec un seuil de référence.

2. Procédé de mise en œuvre d'un essai de simulation selon la revendication 1, **caractérisé en ce que** le premier angle est sensiblement égal à 180°.

3. Procédé de mise en œuvre d'un essai de simulation selon l'une des revendications 1 et 2, **caractérisé en ce qu'**une administration des première et seconde calibrations est effectuée via un serveur distant (314).

4. Procédé de mise en œuvre d'un essai de simulation selon l'une quelconque des revendications 1 à 3, **caractérisé en ce que** l'activation de la génération du second contexte de simulation est effectuée au moyen d'une manette (60).

5. Procédé de mise en œuvre d'un essai de simulation selon l'une quelconque des revendications 1 à 4, **caractérisé en ce que** l'affichage de l'écran semi hémisphérique (1) est figé sur le premier contexte défini par la dernière position et orientation de l'avatar, sur activation de la génération du second contexte.

6. Système de mise en œuvre d'un essai de simulation d'une situation réelle comprenant :
• des moyens pour générer un premier contexte de simulation comprenant des moyens pour afficher :
∘ une première portion d'un environnement virtuel défini sur 360° sur un écran semi hémisphérique (1), ladite portion étant projetée sur un premier angle inférieur à 300° ;
∘ un avatar représentant un utilisateur (5) en simulation, l'avatar étant généré à une position GPS émulée de l'utilisateur (5) en simulation dans l'environnement virtuel, et l'avatar étant dirigé dans l'environnement virtuel grâce à un dispositif de commande (300), le premier affichage étant centré sur une direction de la poitrine de l'avatar ;
• des moyens pour activer une génération d'un second contexte de simulation comprenant:
∘ des moyens de récupérer la position de la tête de l'utilisateur (5) en simulation et de l'orientation de la tête de l'utilisateur (5) en simulation à partir d'un premier dispositif de capture positionné sur un casque porté par l'utilisateur (5) en simulation, le casque ayant une position GPS calibrée pour être celle de l'avatar dans l'environnement virtuel,
∘ des moyens pour générer une seconde portion rafraichie de l'environnement virtuel calculée en fonction de la position et de l'orientation de la tête de l'utilisateur (5) en simulation,
∘ des moyens pour afficher ladite seconde portion sur une optique intégrée au casque,
• des moyens pour activer une génération d'un troisième contexte de simulation comprenant:
∘ des moyens pour récupérer la position de jumelles et de leur orientation à partir d'un second dispositif de capture positionné sur des jumelles maintenues par l'utilisateur (5) en simulation ;
∘ des moyens pour générer une troisième portion rafraichie de l'environnement virtuel calculée en fonction de la position et de l'orientation des jumelles, la troisième portion correspondant à une portion de la seconde portion à laquelle un facteur de grossissement est appliqué,
∘ des moyens pour afficher ladite troisième portion sur une optique intégrée aux jumelles,
la première et la seconde portion coïncidant sur un angle correspondant à celui de la seconde portion pour au moins une position et une orientation prédéfinies de la tête de l'utilisateur (5) en simulation, le premier contexte et le second contexte étant calibrés pour correspondre entre eux lorsque l'orientation de la tête de l'utilisateur (5) en simulation intercepte l'écran semi hémisphérique (1)), le premier contexte et le troisième contexte étant calibrés pour correspondre entre eux lorsque l'orientation de la tête de l'utilisateur (5) en simulation intercepte l'écran semi hémisphérique (1),
et les moyens pour activer la génération du troisième contexte de simulation comporte un calculateur (PC 303) configuré pour comparer la proximité des positions du premier dispositif de capture (41) et du second dispositifs de capture (42) avec un seuil de référence.

7. Système de simulation selon la revendication 6, **caractérisé en ce qu'**il comprend :
• l'écran semi-hémisphérique (1) ;
• deux projecteurs (2, 3) croisés permettant chacun l'affichage d'une demi-portion de l'image sur chacun des côtés de l'écran semi-hémisphérique (1) ;
• un premier générateur d'images (303) et un second générateur d'images (324), les images étant générées à partir de ladite position GPS émulée dans l'environnement virtuel et d'une librairie d'images stockées dans une mémoire ;
• le casque (10) ;
• les jumelles (20), comportant une seconde optique destinée à afficher le troisième contexte rafraichi en fonction de la position et de l'orientation des jumelles obtenues grâce au second dispositif de capture (42) ;
• le premier dispositif de capture (41) et le second dispositif de capture (42), les positions et orientations du casque (10) et des jumelles (20) étant régulièrement transmises au premier générateur d'images (303) ;
• le second dispositif générateur d'images (324), configuré pour calculer le premier contexte en fonction de ladite position GPS émulée dans l'environnement virtuel provenant du premier générateur d'images (303), le premier contexte ainsi calculé étant traité pour être séparé en deux demi-portions d'image transmises chacune à un projecteur (2, 3) respectif parmi lesdits projecteurs ; et
• un dispositif d'administration (314, 311) comprenant un serveur permettant de collecter des données transmises par le premier générateur d'images (303), les données transmises comprenant au moins ladite position GPS émulée dans l'environnement virtuel.

8. Système de simulation selon la revendication 7, **caractérisé en ce qu'**il comprend un premier afficheur (302) configuré pour afficher un contexte parmi les premier, second et troisième contextes.

9. Système de simulation selon la revendication 8, **caractérisé en ce que** le dispositif d'administration (314, 311) comporte un second afficheur (312) permettant de cloner l'image affichée par le premier afficheur (302).

10. Système de simulation selon la revendication 7, **caractérisé en ce que** les premier (41) et second (42) dispositifs de capture comprennent des capteurs électromagnétiques.

11. Système de simulation selon la revendication 7, **caractérisé en ce que** les premier (41) et second (42) dispositifs de capture comprennent des capteurs inertiels et des capteurs à ultrasons.

## Patentansprüche

1. Verfahren zur Durchführung eines Simulationstests einer realen Situation, umfassend:
• eine Erzeugung eines ersten Simulationskontextes mit einer ersten Anzeige:
• eines ersten Abschnitts einer virtuellen Umgebung, die bei 360° auf einem halbkugelförmigen Bildschirm (1) definiert ist, wobei der Abschnitt in einem ersten Winkel von weniger als 300° projiziert wird;
• eines Avatars, der einen Benutzer (5) in der Simulation darstellt, wobei der Avatar an einer emulierten GPS-Position des Benutzers (5) in der Simulation in der virtuellen Umgebung erzeugt wird und der Avatar über eine Steuervorrichtung (300) in der virtuellen Umgebung geleitet wird, wobei die erste Anzeige auf eine Richtung der Brust des Avatars ausgerichtet ist;
• eine Aktivierung einer Erzeugung eines zweiten Simulationskontextes, umfassend:
• eine Wiederherstellung der Position des Kopfes des Benutzers (5) in der Simulation und der Ausrichtung des Kopfes des Benutzers (5) in der Simulation über eine erste Erfassungsvorrichtung, die auf einem Helm positioniert ist, der vom Benutzer (5) in der Simulation getragen wird, wobei der Helm eine GPS-Position hat, die auf die des Avatars in der virtuellen Umgebung kalibriert ist,
• eine Erzeugung eines aktualisierten zweiten Abschnitts der virtuellen Umgebung, die in Abhängigkeit der Position und Ausrichtung des Kopfes des Benutzers (5) in der Simulation berechnet wird,
• eine Anzeige des zweiten Abschnitts auf einer in den Helm integrierten Optik,
• eine Aktivierung einer Erzeugung eines dritten Simulationskontextes, umfassend:
• eine Wiederherstellung der Position eines Fernglases und dessen Ausrichtung über eine zweite Erfassungsvorrichtung, die auf einem Fernglas positioniert ist, das vom Benutzer (5) in der Simulation gehalten wird;
• eine Erzeugung eines aktualisierten dritten Abschnitts der virtuellen Umgebung, die in Abhängigkeit der Position und Ausrichtung des Fernglases berechnet wird, wobei der dritte Abschnitt einem Abschnitt des zweiten Abschnitts entspricht, auf den ein Vergrößerungsfaktor angewendet wird,
• eine Anzeige des dritten Abschnitts in einer in dem Fernglas integrierten Optik,
wobei der erste und der zweite Abschnitt in einem Winkel zusammentreffen, der für mindestens eine vordefinierte Position und Ausrichtung des Kopfes des Benutzers (5) in der Simulation jenem des zweiten Abschnitts entspricht, wobei der erste und der zweite Kontext so kalibriert werden, dass sie einander entsprechen, wenn die Ausrichtung des Kopfes des Benutzers (5) in der Simulation den halbkugelförmigen Bildschirm (1) abfängt, wobei der erste Kontext und der dritte Kontext so kalibriert werden, dass sie einander entsprechen, wenn die Ausrichtung des Kopfes des Benutzers (5) in der Simulation den halbkugelförmigen Bildschirm (1) abfängt,
und die Aktivierung der Erzeugung des dritten Simulationskontextes mittels eines Computers (PC 303) durchgeführt wird, der die Nähe der Positionen der ersten Erfassungsvorrichtung (41) und der zweiten Erfassungsvorrichtung (42) mit einem Referenzschwellwert vergleicht.

2. Verfahren zur Durchführung eines Simulationstests nach Anspruch 1, **dadurch gekennzeichnet, dass** der erste Winkel im Wesentlichen gleich 180° ist.

3. Verfahren zur Durchführung eines Simulationstests nach einem der Ansprüche 1 und 2, **dadurch gekennzeichnet, dass** eine Verwaltung der ersten und zweiten Kalibrierung über einen entfernten Server (314) durchgeführt wird.

4. Verfahren zur Durchführung eines Simulationstests nach einem der Ansprüche 1 bis 3, **dadurch gekennzeichnet, dass** die Aktivierung der Erzeugung des zweiten Simulationskontextes mittels eines Joysticks (60) durchgeführt wird.

5. Verfahren zur Durchführung eines Simulationstests nach einem der Ansprüche 1 bis 4, **dadurch gekennzeichnet, dass** die Anzeige des halbkugelförmigen Bildschirms (1) bei Aktivierung der Erzeugung des zweiten Kontextes auf den ersten Kontext festgelegt wird, der durch die letzte Position und Ausrichtung des Avatars definiert ist.

6. System zur Durchführung eines Simulationstests einer realen Situation, umfassend:
• Mittel zum Erzeugen eines ersten Simulationskontextes, umfassend Mittel zur Anzeige:
• eines ersten Abschnitts einer virtuellen Umgebung, die bei 360° auf einem halbkugelförmigen Bildschirm (1) definiert ist, wobei der Abschnitt in einem ersten Winkel von weniger als 300° projiziert wird;
• eines Avatars, der einen Benutzer (5) in der Simulation darstellt, wobei der Avatar an einer emulierten GPS-Position des Benutzers (5) in der Simulation in der virtuellen Umgebung erzeugt wird und der Avatar über eine Steuervorrichtung (300) in der virtuellen Umgebung geleitet wird, wobei die erste Anzeige auf eine Richtung der Brust des Avatars ausgerichtet ist;
• Mittel zum Aktivieren einer Erzeugung eines zweiten Simulationskontextes, umfassend:
• Mittel zur Wiederherstellung der Position des Kopfes des Benutzers (5) in der Simulation und der Ausrichtung des Kopfes des Benutzers (5) in der Simulation über eine erste Erfassungsvorrichtung, die auf einem Helm positioniert ist, der vom Benutzer (5) in der Simulation getragen wird, wobei der Helm eine GPS-Position hat, die auf die des Avatars in der virtuellen Umgebung kalibriert ist,
• Mittel zum Erzeugen eines aktualisierten zweiten Abschnitts der virtuellen Umgebung, der in Abhängigkeit der Position und Ausrichtung des Kopfes des Benutzers (5) in der Simulation berechnet wird,
• Mittel zum Anzeigen des zweiten Abschnitts in einer in den Helm integrierten Optik,
• Mittel zum Aktivieren einer Erzeugung eines dritten Simulationskontextes, umfassend:
• Mittel zum Wiederherstellen der Position eines Fernglases und seiner Ausrichtung über eine zweite Erfassungsvorrichtung, die auf einem Fernglas positioniert ist, das vom Benutzer (5) in der Simulation gehalten wird;
• Mittel zum Erzeugen eines aktualisierten dritten Abschnitts der virtuellen Umgebung, der in Abhängigkeit der Position und Ausrichtung des Fernglases berechnet wird, wobei der dritte Abschnitt einem Abschnitt des zweiten Abschnitts entspricht, auf den ein Vergrößerungsfaktor angewendet wird,
• Mittel zum Anzeigen des dritten Abschnitts in einer im Fernglas integrierten Optik,
wobei der erste und zweite Abschnitt für mindestens eine vordefinierte Position und Ausrichtung des Kopfes des Benutzers (5) in der Simulation in einem Winkel zusammenfallen, der dem des zweiten Abschnitts entspricht, wobei der erste und der zweite Kontext so kalibriert werden, dass sie einander entsprechen, wenn die Ausrichtung des Kopfes des Benutzers (5) in der Simulation den halbkugelförmigen Bildschirm (1) abfängt, wobei der erste Kontext und der dritte Kontext so kalibriert werden, dass sie einander entsprechen, wenn die Ausrichtung des Kopfes des Benutzers (5) in der Simulation den halbkugelförmigen Bildschirm (1) abfängt, und die Mittel zum Aktivieren der Erzeugung des dritten Simulationskontextes einen Computer (PC 303) umfasst, der konfiguriert ist, um die Nähe der Positionen der ersten Erfassungsvorrichtung (41) und der zweiten Erfassungsvorrichtung (42) mit einem Referenzschwellwert zu vergleichen.

7. Simulationssystem nach Anspruch 6, **dadurch gekennzeichnet, dass** es umfasst:
• den halbkugelförmigen Bildschirm (1);
• zwei gekreuzte Projektoren (2, 3), die jeweils die Anzeige eines halben Abschnitts des Bildes auf jeder Seite des halbkugelförmigen Bildschirms (1) ermöglichen;
• einen ersten Bilderzeuger (303) und einen zweiten Bilderzeuger (324), wobei die Bilder aus der emulierten GPS-Position in der virtuellen Umgebung und aus einer Bibliothek von in einem Speicher gespeicherten Bildern erzeugt werden;
• den Helm (10);
• das Fernglas (20), umfassend eine zweite Optik zum Anzeigen des dritten Kontextes, der in Abhängigkeit der Position und Ausrichtung des Fernglases aktualisiert wird, die über die zweite Erfassungsvorrichtung (42) erhalten werden;
• die erste Erfassungsvorrichtung (41) und die zweite Erfassungsvorrichtung (42), wobei die Positionen und Ausrichtungen des Helms (10) und Fernglases (20) regelmäßig an den ersten Bilderzeuger (303) übertragen werden;
• den zweiten Bilderzeuger (324), der konfiguriert ist, um den ersten Kontext in Abhängigkeit der GPS-Position zu berechnen, die in der virtuellen Umgebung von dem ersten Bilderzeuger (303) emuliert wird, wobei der so berechnete erste Kontext verarbeitet wird, um in zwei Bildhälften aufgeteilt zu werden, die jeweils an einen entsprechenden Projektor (2, 3) der Projektoren übertragen werden; und
• eine Verwaltungsvorrichtung (314, 311) mit einem Server zum Erfassen von Daten, die durch den ersten Bilderzeuger (303) übertragen werden, wobei die übertragenen Daten mindestens die emulierte GPS-Position in der virtuellen Umgebung umfassen.

8. Simulationssystem nach Anspruch 7, **dadurch gekennzeichnet, dass** es eine erste Anzeigevorrichtung (302) umfasst, die konfiguriert ist, um einen der ersten, zweiten und dritten Kontexte anzuzeigen.

9. Simulationssystem nach Anspruch 8, **dadurch gekennzeichnet, dass** die Verwaltungsvorrichtung (314, 311) eine zweite Anzeigevorrichtung (312) zum Klonen des von der ersten Anzeigevorrichtung (302) angezeigten Bildes umfasst.

10. Simulationssystem nach Anspruch 7, **dadurch gekennzeichnet, dass** die erste (41) und zweite (42) Erfassungsvorrichtung elektromagnetische Sensoren umfassen.

11. Simulationssystem nach Anspruch 7, **dadurch gekennzeichnet, dass** die erste (41) und zweite (42) Erfassungsvorrichtung Trägheitssensoren und Ultraschallsensoren umfassen.

## Claims

1. Method for implementing a test simulation of a real situation comprising:
• an operation of generating a first simulation context comprising a first operation of displaying:
∘ a first portion of a virtual environment defined over 360° on a semi-hemispherical screen (1), said portion being projected over a first angle of less than 300°;
∘ an avatar representing a user (5) in simulation, the avatar being generated at an emulated GPS position of the user (5) in simulation in the virtual environment, and the avatar being guided within the virtual environment using a control device (300), the display from the first operation being centred on a direction from the chest of the avatar;
• an operation of activating an operation of generating a second simulation context comprising:
∘ an operation of rendering the position of the head of the user (5) in simulation and the orientation of the head of the user (5) in simulation using a first capture device positioned on a headset worn by the user (5) in simulation, the headset having a GPS position that is calibrated to be that of the avatar in the virtual environment,
∘ an operation of generating a second, refreshed portion of the virtual environment calculated according to the position and orientation of the head of the user (5) in simulation,
∘ an operation of displaying said second portion on an optical system built into the headset,
• an operation of activating an operation of generating a third simulation context comprising:
∘ an operation of rendering the position of binoculars and the orientation thereof using a second capture device positioned on binoculars held by the user (5) in simulation;
∘ an operation of generating a third, refreshed portion of the virtual environment calculated according to the position and orientation of the binoculars, the third portion corresponding to a portion of the second portion to which a magnification factor has been applied,
∘ an operation of displaying said third portion on an optical system built into the binoculars,
the first and second portions being coincident over an angle corresponding to that of the second portion for at least one predefined position and one predefined orientation of the head of the user (5) in simulation, the first context and the second context being calibrated so as to correspond to one another when the orientation of the head of the user (5) in simulation intercepts the semi-hemispherical screen (1), the first context and the third context being calibrated so as to correspond to one another when the orientation of the head of the user (5) in simulation intercepts the semi-hemispherical screen (1),
and the operation of activating the operation of generating the third simulation context is performed by a computer (PC 303) that compares the proximity of the positions of the first capture device (41) and of the second capture device (42) with a reference threshold.

2. Method for implementing a test simulation according to Claim 1, **characterized in that** the first angle is substantially equal to 180°.

3. Method for implementing a test simulation according to either of Claims 1 and 2, **characterized in that** the first and second calibrations are managed via a remote server (314).

4. Method for implementing a test simulation according to any one of Claims 1 to 3, **characterized in that** the operation of activating the operation of generating the second simulation context is performed by means of a controller (60).

5. Method for implementing a test simulation according to any one of Claims 1 to 4, **characterized in that** the display on the semi-hemispherical screen (1) is fixed in the first context defined by the last position and orientation of the avatar, on activation of the operation of generating the second context.

6. System for implementing a test simulation of a real situation comprising:
• means for generating a first simulation context comprising means for displaying:
∘ a first portion of a virtual environment defined over 360° on a semi-hemispherical screen (1), said portion being projected over a first angle of less than 300°;
∘ an avatar representing a user (5) in simulation, the avatar being generated at an emulated GPS position of the user (5) in simulation in the virtual environment, and the avatar being guided within the virtual environment using a control device (300), the display from the first operation being centred on a direction from the chest of the avatar;
• means for activating an operation of generating a second simulation context comprising:
∘ means for rendering the position of the head of the user (5) in simulation and the orientation of the head of the user (5) in simulation using a first capture device positioned on a headset worn by the user (5) in simulation, the headset having a GPS position that is calibrated to be that of the avatar in the virtual environment,
∘ means for generating a second, refreshed portion of the virtual environment calculated according to the position and orientation of the head of the user (5) in simulation,
∘ means for displaying said second portion on an optical system built into the headset,
• means for activating an operation of generating a third simulation context comprising:
∘ means for rendering the position of binoculars and the orientation thereof using a second capture device positioned on binoculars held by the user (5) in simulation;
∘ means for generating a third, refreshed portion of the virtual environment calculated according to the position and orientation of the binoculars, the third portion corresponding to a portion of the second portion to which a magnification factor has been applied,
∘ means for displaying said third portion on an optical system built into the binoculars,
the first and second portions being coincident over an angle corresponding to that of the second portion for at least one predefined position and one predefined orientation of the head of the user (5) in simulation, the first context and the second context being calibrated so as to correspond to one another when the orientation of the head of the user (5) in simulation intercepts the semi-hemispherical screen (1), the first context and the third context being calibrated so as to correspond to one another when the orientation of the head of the user (5) in simulation intercepts the semi-hemispherical screen (1),
and the means for activating the operation of generating the third simulation context includes a computer (PC 303) that is configured to compare the proximity of the positions of the first capture device (41) and of the second capture device (42) with a reference threshold.

7. Simulation system according to Claim 6, **characterized in that** it comprises:
• the semi-hemispherical screen (1);
• two intersecting projectors (2, 3), each allowing a half-portion of the image to be displayed on each side of the semi-hemispherical screen (1);
• a first image generator (303) and a second image generator (324), the images being generated using said emulated GPS position in the virtual environment and a library of images stored in a memory;
• the headset (10);
• the binoculars (20), including a second optical system that is intended to display the third, refreshed context according to the position and orientation of the binoculars obtained by the second capture device (42);
• the first capture device (41) and the second capture device (42), the positions and orientations of the headset (10) and of the binoculars (20) being regularly transmitted to the first image generator (303);
• the second image generator device (324), configured to calculate the first context according to said emulated GPS position in the virtual environment from the first image generator (303), the first context thus calculated being processed so as to be separated into two image half-portions that are each transmitted to one respective projector (2, 3) from said projectors; and
• a management device (314, 311) comprising a server allowing data transmitted by the first image generator (303) to be collected, the transmitted data comprising at least said emulated GPS position in the virtual environment.

8. Simulation system according to Claim 7, **characterized in that** it comprises a first display (302) that is configured to display one context from the first, second and third contexts.

9. Simulation system according to Claim 8, **characterized in that** the management device (314, 311) includes a second display (312) allowing the image displayed by the first display (302) to be cloned.

10. Simulation system according to Claim 7, **characterized in that** the first (41) and second (42) capture devices comprise electromagnetic sensors.

11. Simulation system according to Claim 7, **characterized in that** the first (41) and second (42) capture devices comprise inertial sensors and ultrasound sensors.
